# EUROPEAN PATENT APPLICATION

(11) **EP 4 296 820 A1**
(43) Date of publication of application: **27.12.2023**
(21) Application number: 21935748.0
(22) Date of filing: 27.08.2021

(54) **INSTANCE DEPLOYMENT METHOD AND APPARATUS, CLOUD SYSTEM, COMPUTING DEVICE, AND STORAGE MEDIUM**

(30) Priority: 07.04.2021 CN 202110372379; 22.06.2021 CN 202110694248
(71) Applicant: Huawei Cloud Computing Technologies Co., Ltd., Guizhou 550025 (CN)
(72) Inventor: WANG, Nannan, Shenzhen, Guangdong 518129 (CN); XU, Yang, Shenzhen, Guangdong 518129 (CN)
(74) Representative: Isarpatent
(86) International application number: PCT/CN2021/115157
(87) International publication number: WO 2022/213529

(57) **Abstract**

This application discloses an instance deployment method and apparatus, a cloud system, a computing device, and a storage medium. The method includes: obtaining a resource requirement of a service; and deploying instances of the service across a central cloud and an edge cloud based on the resource requirement of the service. In this method, global resources of the central cloud and the edge cloud are scheduled in combination. This can implement instance deployment across the central cloud and the edge cloud, meet requirements of instance deployment in various service scenarios, meet a large-scale resource demand of a user, and facilitate increasing resource usage.

## Description

### TECHNICAL FIELD

This application relates to the field of cloud service technologies, and in particular, to an instance deployment method and apparatus, a cloud system, a computing device, and a storage medium.

### BACKGROUND

A public cloud is a cloud infrastructure (such as a physical server or a virtual machine) provided by a cloud service provider to the general public, a large industry collective, or the like. Any qualified user may rent public cloud resources from the cloud service provider, to deploy and use a cloud service. A conventional public cloud built on a centralized cloud computing architecture may be called a central cloud. Resource pools of the central cloud are usually large and centralized, and are usually of a small quantity. An edge cloud is also a type of the public cloud, and is built on a distributed cloud computing architecture. Resource pools of the edge cloud are usually small and scattered, and are usually of a large quantity.

Currently, resource scheduling of the central cloud and the edge cloud is performed separately. Therefore, a user can select only either the central cloud or the edge cloud for deploying instances of a service at a time. Actually, provided that a requirement of the service can be met, the user does not care about whether to schedule resources of the central cloud or resources of the edge cloud. This separate scheduling manner brings difficulties in selection and repeated settings to the user, makes it difficult to increase resource usage, and cannot meet a large-scale resource demand of the user.

### SUMMARY

This application provides an instance deployment method and apparatus, a cloud system, a computing device, and a storage medium. Resources of a central cloud and an edge cloud are scheduled in combination. This can implement instance deployment of a service across a central cloud and an edge cloud, meet a large-scale resource demand of a user, and facilitate increasing resource usage.

According to a first aspect, this application provides an instance deployment method, where the method includes: obtaining a resource requirement of a service; and deploying instances of the service across a central cloud and an edge cloud based on the resource requirement of the service.

The service refers to a specific service that a user needs to implement, for example, cloud office, online education, the internet of things, or game acceleration. A specific type of the service is not limited in this application.

It can be learned that the resource requirement of the service is obtained, and then the instances of the service are automatically deployed across the central cloud and the edge cloud based on the resource requirement. This can meet the resource requirement of the service, prevent the user from performing selection between the central cloud and the edge cloud, support a large-scale resource demand, and increase global resource usage of the central cloud and the edge cloud.

Based on the first aspect, in a possible embodiment, the method further includes: obtaining deployment location information of the service, where the deployment location information is used to separately determine one or more availability zones (availability zones, AZs) from the central cloud and the edge cloud to obtain N availability zones, and the N availability zones are used for deploying the instances of the service.

It should be understood that the deployment location information may restrict a (approximate) deployment range of the instances of the service. The deployment location information of the service is obtained, so that the one or more availability zones may be determined separately from the central cloud and the edge cloud, and the N availability zones are determined in total, in other words, the N availability zones are determined across the central cloud and the edge cloud. A part of the N availability zones belong to the central cloud, and the other part of the N availability zones belong to the edge cloud. Deploying the instances of the service in the N availability zones implements deployment of the instances across the central cloud and the edge cloud. This can meet a requirement of the service, and increase resource usage.

Based on the first aspect, in a possible embodiment, the obtaining deployment location information of the service includes: obtaining the deployment location information of the service input by the user. In other words, the deployment location information may be input by the user. For example, after the user inputs the deployment location information of the service on a terminal device, the deployment location information input by the user is obtained, so that the N availability zones for deploying the instances of the service can be determined.

Based on the first aspect, in a possible embodiment, the deployment location information includes at least one of a geographical location level and a geographical location name. In other words, the deployment location information may be set by using the geographical location level and/or the geographical location name. In this manner, no region (region) or availability zone is directly provided, and the N availability zones need to be automatically determined based on the geographical location level and/or the geographical location name. For example, the deployment location information input by the user includes a geographical location name Wuhan, and then the N availability zones are determined based on the deployment location information.

Based on the first aspect, in a possible embodiment, the deployment location information includes at least one of a target area and a target availability zone. In other words, the deployment location information may alternatively be set by using the target area and/or the target availability zone, and then the N availability zones are determined based on the deployment location information. It should be understood that the target area may be one or more regions, the target availability zone may be one or more availability zones (in the target area), the N availability zones belong to the target area, and the target availability zone includes the N availability zones. For example, the geographical location information input by the user includes a region 1 of the target area, and then, based on the geographical location information, appropriate N availability zones in the region 1 may be automatically determined for deploying the instances of the service.

Based on the first aspect, in a possible embodiment, the deployment location information further includes a priority of each of the N availability zones. Because the deployment location information may further include the priority of each availability zone, when the instances are deployed across the central cloud and the edge cloud, an availability zone with a higher priority may be preferentially selected for deploying the instances of the service.

Based on the first aspect, in a possible embodiment, the method further includes: obtaining a deployment strategy, where the deployment strategy is used to determine distribution of the instances of the service in the N availability zones. In other words, the deployment strategy may determine how the instances of the service are distributed among N availability zones. For example, the instances of the service may be deployed in each of the N availability zones as dispersedly as possible, or may be centralized in one or more of the N availability zones as much as possible. It should be understood that the deployment strategy may further determine a (maximum or minimum) distribution quantity of the instances of the service in each availability zone, a distribution proportion, and the like. For example, the deployment strategy requires that a distribution proportion of an availability zone 1 is 20%. This indicates that 20% of the instances of the service need to be deployed in the availability zone 1.

Based on the first aspect, in a possible embodiment, the deployment strategy includes any one of geographical centralization, geographical dispersion, costs first, data synchronization, latency first, and performance first. For example, a cloud service provider may provide the foregoing specific deployment strategies to be selected for the user, and then the instances of the service are deployed in the N availability zones based on a specific deployment strategy selected by the user.

Based on the first aspect, in a possible embodiment, the resource requirement includes a resource type, a quantity of required resources, and M resource specifications, and M is a positive integer.

Based on the first aspect, in a possible embodiment, the resource type includes at least one of a virtual machine, a docker, and a bare metal server. In other words, the user may select virtual machine resources, docker resources, bare metal server resources, or even a plurality of resource types simultaneously, to implement deployment of mixing instances with the plurality of resource types.

Based on the first aspect, in a possible embodiment, the deploying instances of the service across a central cloud and an edge cloud specifically includes: for each of the M resource specifications, determining a quantity of first instantiations of each resource specification in each of the N availability zones; and if a sum of quantities of first instantiations of each resource specification in all the availability zones is greater than or equal to the quantity of required resources, determining, based on the first instantiation of each resource specification in each availability zone, the resource requirement, and the deployment strategy, a quantity of second instantiations of each resource specification in each availability zone, and then deploying the instances of the service based on the quantity of second instantiations of each resource specification in each availability zone.

It can be learned that the quantity of first instantiations of each resource specification in each availability zone is obtained, and then the sum of quantities of first instantiations of each resource specification in all the availability zones is calculated, so that it can be determined whether resources in current N availability zones meet the quantity of required resources of the service. When the quantity of required resources can be met, the quantity of second instantiations of each resource specification in each availability zone, that is, a quantity of instances that actually need to be deployed in each availability zone based on each resource specification, is determined based on the first instantiation of each resource specification in each availability zone, the resource requirement, and the deployment strategy, and finally, deployment of the instances of the service is completed in the N availability zones based on the quantity of second instantiations of each resource specification in each availability zone. This method supports instances with a plurality of resource specifications to be deployed in a same availability zone. This facilitates increasing resource usage of the availability zone and implements deployment of mixing the instances with the plurality of resource specifications.

Based on the first aspect, in a possible embodiment, the method further includes: if the N availability zones cannot meet the resource requirement of the service, prompting the user of a deployment failure. For example, the N availability zones are determined based on the deployment location information of the service input by the user, but the N availability zones cannot meet the resource requirement of the service (where resources in the N availability zones may be insufficient). Consequently, the user is prompted with the deployment failure. Subsequently, the user may input new deployment location information, and then re-determine N availability zones based on the new deployment location information for deploying the instances of the service. The user may alternatively directly select N availability zones that are automatically recommended. The N availability zones that are automatically recommended can meet the resource requirement of the service, and no deployment failure occurs.

Based on the first aspect, in a possible embodiment, the resource requirement further includes any one of a priority, an allocation weight, and a minimum allocation proportion of each of the M resource specifications.

It may be understood that if the resource requirement includes the priority of each resource specification, information may be used when the instances of the service are deployed, and a resource specification with a higher priority may be preferentially used for instantiation. Therefore, the user may set the priority of each resource specification based on a requirement of the service of the user. In this way, a preference of the user for one or more resource specifications can be met, to preferentially select the resource specification with the higher priority for instantiation, and the quantity of required resources of the service can be ensured as much as possible, to enable the instances of the service to be deployed smoothly. If the resource requirement includes the allocation weight of each resource specification, instantiation may be performed based on the allocation weight of each resource specification when the instances of the service are deployed. For example, if an allocation weight of a first resource specification is 40%, the first resource specification is used for instantiation based on 40% of the quantity of required resources. If the resource requirement includes the minimum allocation proportion of each resource specification, the instances are deployed based on the minimum allocation proportion. For example, if the minimum allocation proportion of a specific resource specification is 20%, a quantity of instances to be instantiated based on the resource specification should be greater than or equal to 20% of the quantity of required resources.

According to a second aspect, an embodiment of this application provides an instance deployment apparatus, where the apparatus includes: an obtaining module, configured to obtain a resource requirement of a service; and a processing module, configured to deploy instances of the service across a central cloud and an edge cloud based on the resource requirement of the service.

Each module of the foregoing instance deployment apparatus is specifically configured to implement the method in any embodiment of the first aspect.

According to a third aspect, an embodiment of this application provides a computing device, where the device includes a processor and a memory. The processor and the memory may be connected to each other by using a bus, or may be integrated together. The processor is configured to read program code stored in the memory, to perform the method in any embodiment of the first aspect.

According to a fourth aspect, an embodiment of this application provides a computer-readable storage medium, where the computer-readable storage medium is configured to store implementation code of the method in any embodiment of the first aspect.

According to a fifth aspect, an embodiment of this application provides a computer program (product), where the computer program (product) includes program instructions. When executed, the computer program product is configured to perform any method in the first aspect.

According to a sixth aspect, an embodiment of this application provides a central cloud, including the computing device.

According to a seventh aspect, an embodiment of this application provides an edge cloud, including the computing device.

In other words, the computing device may be located in a central cloud, or may be located in the edge cloud.

According to an eighth aspect, an embodiment of this application provides a cloud system, including the computing device and a user terminal. The user terminal herein may be a mobile phone, a tablet computer, a notebook computer, or the like. This is not specifically limited in this application. A user may input related information of a service by using the user terminal, for example, may input, on the user terminal, at least one of a resource requirement, deployment location information, and a deployment strategy that are of the service, to implement setting of deployment of instances of the service. It should be understood that the computing device in the cloud system may be located in a central cloud, or may be located in an edge cloud.

It may be understood that any one of the foregoing aspects may be implemented together with any other aspect or aspects, or may be implemented independently.

In conclusion, according to the instance deployment method provided in this embodiment of this application, by obtaining the resource requirement of the service, the instances of the service may be deployed across the central cloud and the edge cloud based on the resource requirement of the service. The resource requirement may include the resource type, the quantity of required resources, and the M resource specifications. The deployment location information of the service is obtained, so that the N availability zones may be determined across the central cloud and the edge cloud, and then the service instances are deployed in the N availability zones. The deployment location information may include one or more of the geographical location level, the geographical location name, the target area, the target availability zone, and the priority of each of the N availability zones. The deployment location information of the service may be input by the user. The user may set the deployment location information by using the foregoing dimensions, to meet the service requirement of the user. The deployment strategy is obtained, so that the distribution of the service instances in the N availability zones may be determined. The deployment strategy may include any one of the geographical centralization, the geographical dispersion, the costs first, the data synchronization, the latency first, and the performance first. The user may select an appropriate deployment strategy from the foregoing deployment strategies. The deployment of the service instances across the central cloud and the edge cloud may specifically be: The quantity of first instantiations of each resource specification in each availability zone is first obtained, to determine whether resources in the N availability zones can meet the quantity of required resources; and if the resources in the N availability zones can meet the quantity of required resources, the quantity of second instantiations of each resource specification in each availability zone is then determined, to implement the deployment of the service instances in the N availability zones. When the N availability zones cannot meet the service resource requirement, the user may be further prompted with the deployment failure, so that the user performs a subsequent operation, for example, re-inputs the deployment location information.

It can be learned that because in this method, global resources of the central cloud and the edge cloud are scheduled in combination, the user does not need to select either the central cloud or the edge cloud, and may use resources of the central cloud and the edge cloud simultaneously. It is determined based on the deployment location information that the part of the N availability zones belong to the central cloud, and the other part of the N availability zones belong to the edge cloud. The deployment of the instances of the service in the N availability zones means that deployment of the instances across the central cloud and the edge cloud are implemented. This can meet requirements of the deployment in various service scenarios, and increase the resource usage. It should be understood that the N availability zones may be directly specified by the user. For example, if the user directly provides the target availability zone in the deployment location information, the target availability zone is directly determined as the N availability zones. If the N availability zones specified by the user cannot meet the resource requirement of the service, the user is prompted with the deployment failure, and the user may re-specify the N availability zones or accept recommended N availability zones. Alternatively, the N availability zones may be indirectly specified by the user. For example, the deployment location information does not directly provide the target availability zone, but provides a specific geographical location name. In this case, the N availability zones may be automatically determined within a range of the geographical location name based on the deployment location information. This method further supports selecting one or more resource specifications and resource types, so that the deployment of mixing the instances with the plurality of resource types, a plurality of resource specifications, and a plurality of availability zones can be implemented. The instances with different resource specifications may be deployed in a same availability zone, to increase the resource usage of the availability zones. The method further supports setting the priority, the allocation weight, or the minimum allocation proportion of each resource specification, and setting the priority of each availability zone, to meet different service requirements. During deploying the instances of the service, these pieces of information may be combined, to enable flexible and diversified instance deployment of the service.

### BRIEF DESCRIPTION OF DRAWINGS

To describe the technical solutions in embodiments of this application more clearly, the following briefly describes the accompanying drawings for describing embodiments.
FIG. 1 is a schematic diagram of an architecture of a public cloud according to an embodiment of this application;
FIG. 2 is a schematic diagram of a central cloud according to an embodiment of this application;
FIG. 3 is a schematic diagram of an edge cloud according to an embodiment of this application;
FIG. 4 is a schematic diagram of an edge-cloud synergy according to an embodiment of this application;
FIG. 5 is a schematic flowchart of an instance deployment method according to an embodiment of this application;
FIG. 6 is a schematic diagram of a structure of an instance deployment apparatus according to an embodiment of this application; and
FIG. 7 is a schematic diagram of a structure of a computing device according to an embodiment of this application.

### DESCRIPTION OF EMBODIMENTS

Application scenarios related to embodiments of this application are described below.

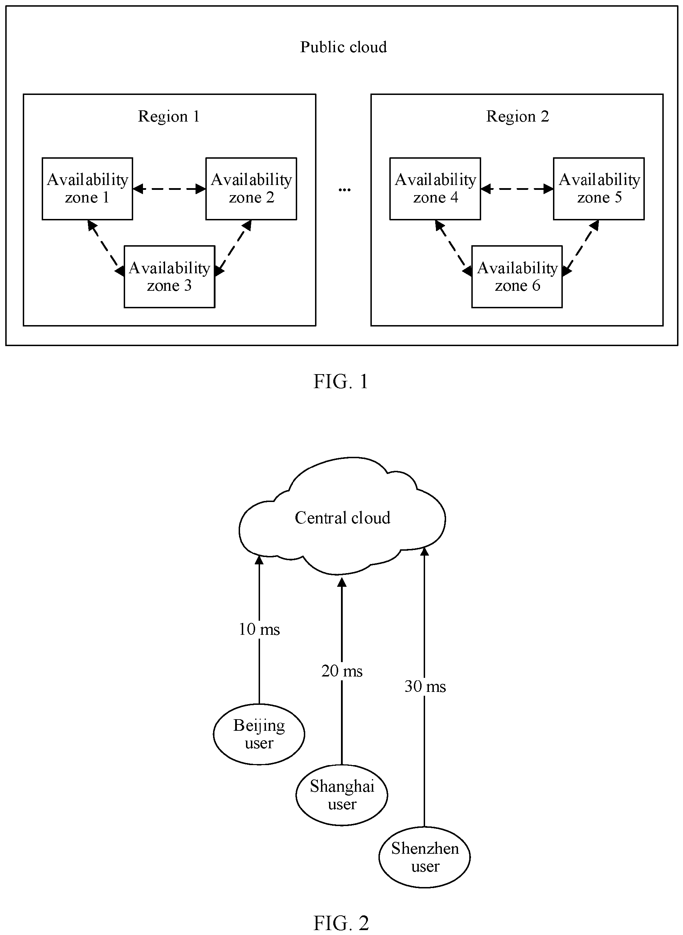

A data center is an underlying material foundation of cloud services, and includes basic resources (computing resources, storage resources, and network resources) owned by a cloud service provider. To serve users in different regions, the cloud service provider needs to build many data centers across the country and even around the world. To better organize and design these data centers, provide more secure and reliable cloud services for a user, and consider requirements of local policies, laws, regulations, and the like, as shown in FIG. 1, a two-layer design architecture: a region (region) and availability zones (availability zones, AZs), may be used to decouple the cloud services (including a public cloud) from an underlying physical data center.

The region is a geographical location concept, and is usually a geographical area in which a data center is located. The region may be divided based on a plurality of dimensions, for example, may be divided based on a region level, including South China and North China; may be divided based on a province level, including Hubei Province and Hunan Province; based on a city level, including Beijing and Shenzhen; or may be divided based on a county level. A division manner, a quantity, a name, and the like of the region are not specifically limited in this application.

An AZ is a partition of physical resources, and usually refers to a physical zone in which an equipment room and a site are located. One AZ may represent a set of one or more physical data centers. A specific division manner of the AZ is not limited in this application. For example, one equipment room with independent power supply or one rack with independent power supply may be divided into the AZ. AZs are independent of each other in terms of energy consumption and network. In this way, a fault in one availability does not affect another availability zone.

As shown in FIG. 1, one region usually includes a plurality of AZs with low latency interconnection. This can be used to design services such as disaster recovery backup and load balancing across AZs in a same region. It should be noted that names and quantities of regions and availability zones in FIG. 1 are merely examples, and constitute no limitation in this application.

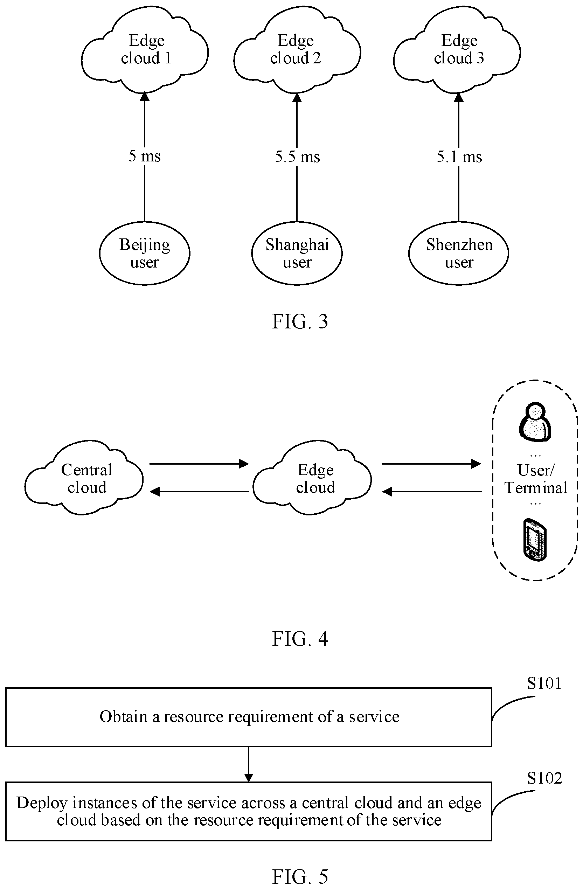

A first public cloud may be built on a centralized cloud computing architecture, deployed in a large data center, and can provide a cloud computing service for a user. For ease of description, the first public cloud is referred to as a central cloud in the following descriptions. A data center of the central cloud is usually large and centralized, and is usually of a small quantity and far away from a user/terminal device. For example, as shown in FIG. 2, due to restrictions of geographical locations and network transmission, there may be long latencies in accessing the central cloud by users/terminal devices at different locations. Computing that demands for high real-time performance and that is performed in the central cloud may cause long latency, network congestion, and service quality deterioration. This cannot provide low latency, high bandwidth, and the like for various innovative scenarios (such as augmented reality, virtual reality, interactive live broadcast, and autonomous driving) of the service. However, a computing capability of the terminal device (such as a camera or a sensor) is usually insufficient and cannot be compared with a computing capability of a cloud. In this case, an edge cloud may be used. For example, as shown in FIG. 3, the users/terminal devices at different locations may access the edge cloud nearby. This meets a computing requirement, and greatly shortens latency.

Specifically, the edge cloud is a cloud computing platform built on an edge data center based on a core of cloud computing technologies and an edge computing capability, and is of low latency and high bandwidth. A data center (an edge site) of the edge cloud is usually small, scattered, and is usually of a large quantity. The edge sites include but are not limited to a content delivery network (content delivery network, CDN) node, a point of presence (point of presence, POP), and mobile edge computing (mobile edge computing, MEC) nodes, and the like. Based on a distributed cloud computing architecture, these edge sites can provide public cloud services in small clusters.

The edge cloud is also a type of public cloud. It may be considered that the edge cloud is extension of central cloud capabilities. As shown in FIG. 4, the edge cloud establishes the edge site close to a user/terminal, and sinks a service of the central cloud to the edge site close to the user/terminal, so that the edge site has a capability that is the same as or similar to that of the central cloud, and can process a computing requirement of the terminal device in real time. For example, massive surveillance cameras located at an edge of an urban road collect original video data and transmit the original video data to a nearby edge site. The edge site may aggregate the original video data. Because a visual artificial intelligence (artificial intelligence, AI) inference model and parameter that are delivered by the central cloud are stored in the edge site, AI computing and feature information extraction on the original video data may be completed at the edge site, reducing response latency and bandwidth costs, and reducing cloud pressure on the central cloud.

During instance (instance) deployment, one solution is as follows: Instances of a same service are deployed in either the central cloud or the edge cloud, and when applying for cloud computing resources from the cloud service provider, the user can select only either the central cloud or the edge cloud at a time. To better meet requirements in various application scenarios, global resources of the central cloud and the edge cloud may be combined. Therefore, in a second solution, the instance deployment may be performed across the central cloud and the edge cloud. For the instances of the same service, a part of instances may be deployed on the central cloud, and the other part of instances may be deployed on the edge cloud.

The following mainly describes an instance deployment method in the second solution: obtaining a resource requirement of a service, and deploying instances of the service across the central cloud and the edge cloud based on the resource requirement of the service. The service herein refers to a specific service that a user needs to implement, for example, cloud office, online education, the internet of things, or game acceleration. A specific type, a coverage range, and the like of the service are not limited in this application.

In a possible embodiment, the resource requirement includes a resource type, a quantity of required resources, and M resource specifications, and M is a positive integer. The following describes the resource type, the quantity of required resources, and a resource specification in detail.
(1) The resource type may be a virtual machine (virtual machine, VM), a docker (docker), or another resource type, for example, a bare metal server (bare metal server, BMS). A user selects one or more resource types, to implement deployment of mixing instances with a plurality of resource types. For ease of description, the following uses an example in which the resource type is the virtual machine for description.
(2) The quantity of required resources refers to a quantity of resources needed for implementing the service. For example, if the quantity of required resources is 1000, 1000 virtual machines are needed to implement a specific service, or a user intends to apply for 1000 virtual machines to deploy the service.
(3) The resource specification is a parameter template of an instance, and is used to define a parameter of an instance of the service. A parameter in the resource specification includes a quantity of central processing units (central processing units, CPUs), a size of a disk (disk), a size of a random access memory (random access memory, RAM), and the like. It should be noted that the parameter in the resource specification is not specifically limited in this application, and there may further be more or fewer parameters. An instance is a basic unit for a cloud service provider to provide computation for a service of a user. Instances with different resource specifications may provide different computing capabilities. In computer science, a virtual machine is software implementation of a computer that can run a program like a real machine, and is a complete computer system that is simulated by software, has complete hardware system functions, and is run in an independent environment. If the resource type is the virtual machine, a parameter defined in the resource specification is a hardware specification parameter simulated by the virtual machine. One instance is a virtual machine actually created (that is, instantiated) based on a specific resource specification.

In this application, there may be a plurality of default resource specifications for the user to select. For example, Table 1 provides several resource specifications and corresponding parameters (where a default unit of a RAM is MB, and a default unit of a disk is G). First three resource specifications: flavor_id_1, flavor_id_2, and flavor_id_3, are provided by default. For a resource specification whose identity document (identity document, ID), a size of a RAM is flavor_id_1 is 2048 MB, a size of a disk is 20 GB, and there is one CPU. In addition to selecting the default resource specifications, the user may further define another resource specification based on a requirement of the service. For example, a user considers that parameters of the three default resource specifications are too large to meet the requirement of the service of the user, and therefore defines a fourth resource specification flavor_id_4 in Table 1: A size of a RAM is 512 MB, a size of a disk is 1 GB, and there is one CPU. The user can subsequently select flavor_id_4 for use. It should be noted that Table 1 merely provides several resource specifications as examples. Names and parameters of various resource specifications are merely examples. Each resource specification may further include more or fewer parameters. This is not specifically limited in this application.

**Table 1 Resource specification**

| ID | RAM | Disk | CPUs |
|---|---|---|---|
| flavor_id_1 | 2048 | 20 | 1 |
| flavor_id_2 | 4096 | 40 | 2 |
| flavor_id_3 | 8192 | 80 | 4 |
| flavor_id_4 | 512 | 1 | 1 |

The user may select M resource specifications from the default or user-defined resource specifications, may provide M resource specifications in a form based on Table 1, may directly provide IDs of the resource specifications, or the like. For example, if the user intends to select the two resource specifications flavor_id_1 and flavor_id_4, [flavor_id_1, flavor_id_4] is displayed in resource information.

In a possible embodiment, the resource requirement may further include a priority of each of the M resource specifications. A resource specification with a higher priority is preferentially used for instantiation. A manner of setting the priorities of the resource specifications is not specifically limited in this application. For example, a sequence of the resource specifications may indicate the priorities of the resource specifications. It is assumed that the user provides two resource specifications [flavor_id_1, flavor_id_4] in the resource requirement, and it may be determined that a priority of flavor_id_1 is higher than a priority of flavor_id_4. Therefore, instantiation is performed based on the resource specification flavor_id_1.

In a possible embodiment, the resource requirement may further include an allocation weight of each of the M resource specifications. During deployment of the instances of the service, instantiation is performed based on an allocation weight of each resource specification. For example, the user sets an allocation weight of flavor_id_1 to 40%, and an allocation weight of flavor_id_4 to 60%. This indicates that instances obtained by performing instantiation based on flavor_id_1 account for 40% of the quantity of required resources, and instances obtained by performing instantiation based on flavor_id_4 account for 60% of the quantity of required resources.

In a possible embodiment, the resource requirement may further include a minimum allocation proportion of each of the M resource specifications. For example, the user sets a minimum allocation proportion of flavor_id_1 to 20%. This indicates that instances obtained by performing instantiation based on flavor_id_1 should not be less than 20% of the quantity of required resources.

In a possible embodiment, the instance deployment method further includes: obtaining deployment location information of the service, where the deployment location information is used to separately determine one or more availability zones from the central cloud and the edge cloud to obtain N availability zones, and the N availability zones are used for deploying the instances of the service.

It may be understood that a part of the N availability zones belong to the central cloud, and the other part of the N availability zones belong to the edge cloud. Deploying the instances of the service in the N availability zones implements deployment of the instances across the central cloud and the edge cloud. For example, there are three availability zones: AZ_1, AZ_2, and AZ_4, where AZ_1 and AZ_2 belong to the central cloud, and AZ_4 belongs to the edge cloud. The deployment of the instances of the service in the three availability zones implements deployment of the instances across the central cloud and the edge cloud. The N availability zones may belong to a plurality of regions. If the N availability zones belong to the plurality of regions, the deployment of the instances of the service in the N availability zones means that cross-region deployment of the instances is implemented. For the user, a cross-region service scenario may be implemented. For the cloud service provider, a problem that resources in a single region cannot meet a large-scale resource demand of the user may be resolved. Resources in a plurality of regions can be combined to meet the quantity of required resources of the user as much as possible, and the instances of the service are deployed successfully.

It should be noted that the deployment location information is used to restrict a (approximate) deployment scope of the instances. The deployment location information may be input by the user, or may be automatically determined by a computing device (the computing device is described below). Content included in the deployment location information input by the user is similar to content included in the deployment location information determined automatically. In a possible embodiment, the deployment location information includes at least one of a target area and a target availability zone. In another possible embodiment, the deployment location information includes at least one of a geographical location level and a geographical location name. The following uses only an example in which the deployment location information is input (set by the user) by the user to specifically describe the deployment location information. The user mainly sets the deployment location information in the following two manners.

Manner 1: Set the deployment location information based on two logic layers: a target area and a target availability zone.

It should be understood that resources of the central cloud and the edge cloud may be separately divided based on a two-layer architecture: a region and the AZ, or are uniformly divided based on a two-layer architecture: a region and the AZ. For details, refer to related descriptions in FIG. 1. Details are not described herein. After divided in the foregoing manner, the resources of the central cloud and the edge cloud may be displayed to users for selection. For example, a series of regions and AZs included in each region may be provided in a form of Table 2. It should be noted that Table 2 may further include more or less content. Quantities, names, inclusion relationships, and the like of regions and availability zones in Table 2 are merely examples, and constitute no limitation. Certainly, in addition to displaying the available regions and the AZs to the users in a table form, there may be another manner. This is not limited in this application.

**Table 2 Region and availability zone list**

| Cloud type | Region name | Availability zone name |
|---|---|---|
| Central cloud | Region 1 | AZ_1 |
| | | AZ_2 |
| | | AZ_3 |
| | Region 2 | AZ_4 |
| | | AZ_5 |
| Edge cloud | Region 3 | AZ_6 |
| | | AZ_7 |
| | ... | ... |

In a possible embodiment, the user may specify only the target area in the deployment location information, and does not specify the target availability zone. The N availability zones belong to the target area, and the target area may be one or more regions. It should be noted that, if the user specifies only the target area, the computing device needs to automatically select appropriate N availability zones in the target area. For example, the user specifies only the region 1 (the target area) in the deployment location information, but does not specify the target availability zone, that is, does not specifically specify which AZ or AZs in the region 1 is/are used, and the computing device may automatically select N availability zones from the region 1 based on current resource usage of the region 1, to meet the resource requirement of the service, and directly select all or some AZs in the region 1 for the user.

In another possible embodiment, the user may specify the target availability zone in the deployment location information, where the target availability zone may be one or more availability zones, and the target availability zone includes the N availability zones. It should be understood that if specifying the target availability zone, the user may directly determine the target availability zone as the N availability zones, or use a part of availability zones in the target availability zone as the N availability zones, for deploying the instances of the service. The user may directly specify the target availability zone in the deployment location information. Alternatively, the user may first specify the target area, then specify the target availability zone in the target area based on the two logic layers: the target area and the target availability zone, and finally determine the N availability zones for deploying the instances of the service.

Manner 2: Set the deployment location information based on two logic layers: a geographical location level and a geographical location name.

In a possible embodiment, the geographical location level may be any one of a region level, a province level, a city level, or a county level. After selecting a specific geographical location level, a user further needs to select one or more geographical location names under the geographical location level. It should be noted that division of the geographical location level is not specifically limited in this application, and geographical location names specifically included in each geographical location level are not limited either. It can be learned that if the user sets the deployment location information based on the geographical location level and the geographical location name, N availability zones are not directly provided. Therefore, the computing device needs to filter and make a decision on global resources of the central cloud and the edge cloud, and automatically determine the N availability zones based on the deployment location information set by the user, for deploying instances of the service.

For example, if the user intends to deploy a specific service in Hubei Province, the user sets the geographical location level to the province level in the deployment location information, and then selects Hubei Province (geographical location name) under the level. Based on the deployment location information, the computing device determines that there are three available zones: AZ_1, AZ_2, and AZ_3 in Hubei Province, where AZ_1 and AZ_2 belong to the central cloud, and AZ_3 belongs to the edge cloud. The computing device may directly select the three availability zones for deploying the instances of the service, or may perform selection based on resource usage in the three availability zones. It is assumed that resource usage of current AZ_1 is high, and remaining resources may be insufficient. In this case, other two availability zones (AZ_2 and AZ_3) with low resource usage are selected for deploying the instances. In this way, a resource requirement of the user can be ensured. In addition, the resource usage of each availability zone can be balanced and resources can be properly allocated. This avoids that some availability zones are used excessively and some availability zones are hardly used. It should be noted that a manner of determining the N availability zones in manner 2 is not specifically limited in this application. The manner may be a selection manner in which balancing is performed based on the resource usage in the foregoing example, or may be another manner.

It can be learned that manner 1 and manner 2 are two different manners in which the user sets the deployment location information. If the user learns of specific regions/AZs, and learns of specific regions/AZs to which the instances are deployed, it is intuitive to use manner 1 to set the deployment location information. If the user does not learn of specific regions/AZs, or does not learn specific regions/AZs to be selected meet a requirement of the service of the user, the user may directly select manner 2 to set the geographical location level and geographical location name based on a desired coverage range of the service, and does not need to specify a target area or a target availability zone, reducing selection difficulties. Then, the computing device automatically determines the N availability zones based on the geographical location level and the geographical location name in the deployment location information, and may further feed back selected N availability zones to the user.

In a possible embodiment, the deployment location information may further include a priority of each of the N availability zones. The instance is preferentially deployed in an availability zone with a higher priority (in other words, the instance is preferentially created in the availability zone). For example, two availability zones [AZ_1, AZ_2] are provided, and a sequence of the availability zones may indicate a priority. Therefore, it may be determined that a priority of AZ_1 is higher than a priority of AZ_2. AZ_1 is preferentially selected for deploying the instances of the service, and AZ_2 is then selected for deploying the instances of the service. It should be noted that a manner of setting the priority of each availability zone is not specifically limited in this application.

In a possible embodiment, if the N availability zones cannot meet a resource requirement of the service, the user is prompted with a deployment failure. For example, the N availability zones are determined based on the deployment location information of the service input by the user, but the N availability zones cannot meet the resource requirement of the service (where resources in the N availability zones may be insufficient). Consequently, the user is prompted with the deployment failure. The user may subsequently input new deployment location information, or choose to accept deployment location information automatically recommended by the computing device, to deploy the instances of the service.

It should be further noted that the N availability zones used for deploying the instances of the service may alternatively be determined one by one by the computing device. For example, when finding, in the central cloud, that the instances of the service can be deployed in an availability zone 1, the computing device first deploys the instances in the availability zone 1. However, only a part of the instances of the service can be deployed in the availability zone 1, and therefore, the computing device further continues to search for another availability zone to deploy a remaining instance. Then, the computing device finds, in the edge cloud, that the instances of the service can be deployed in the availability zone 3, and a part of the instances of the service are deployed in the availability zone 3. The computing device continues to search for an appropriate availability zone in the central cloud and the edge cloud until all the instances of the service are deployed, to finally determine N availability zones for deploying the instances of the service. It should be understood that the computing device determines the N availability zones one by one in the foregoing manner. This can surely meet the resource requirement of the service, and no deployment failure occurs.

In a possible embodiment, the instance deployment method further includes: obtaining a deployment strategy, where the deployment strategy is used to determine distribution of the instances of the service in the N availability zones.

In a possible embodiment, the deployment strategy may be any one of geographical centralization, geographical dispersion, costs first, data synchronization, latency first, and performance first. Specific requirements of the foregoing deployment strategies are as follows.

Geographical centralization: The instances of the service are deployed in one or more AZs/regions as centrally as possible.

Geographical dispersion: The instances of the service are deployed in each of the N availability zones as dispersedly as possible.

Costs first: The instances of the service are preferentially deployed in an AZ with a low resource price. It should be understood that a specific pricing manner of a resource in each AZ is determined by a cloud service provider. For example, different resource specifications have different sales unit prices in a same AZ. A resource price may be fixed or variable. When applying for cloud computing resources, a user may select a costs-first strategy to reduce costs as much as possible. In this case, a computing device preferentially deploys the instances of the service in an availability zone with a low resource price to reduce costs of the user.

Data synchronization: The user needs to specify a data source system in advance, for example, a scalable file service (scalable file service, SFS) or an object storage service (object storage service, OBS). When the instances of the service are deployed, a nearest AZ for deploying the instances of the service is selected based on a metadata location fed back by the data source system, so that the instances of the service are as close as possible to data, reducing transmission costs.

Latency first: The user needs to specify a target location and a latency requirement. Only an AZ that meets the latency requirement in the target location is selected for deploying the instances of the service.

Performance first: An AZ with a high-performance service is preferentially selected for deploying the instances of the service. It should be understood that performance of a service that can be provided by each AZ is determined by the cloud service provider. For example, if a specific AZ includes a large quantity of high-performance servers, the specific AZ can provide a high-performance computing service to external parties. If the user has a high requirement on computing performance, the user may preferentially select the performance.

The following describes a specific process of deploying the instances of the service across the central cloud and the edge cloud.

In a specific possible embodiment, for each of M resource specifications, a quantity of first instantiations of each resource specification in each of N availability zones is determined. If a sum of quantities of first instantiations of each resource specification template in all the availability zones is greater than or equal to a quantity of required resources, a quantity of second instantiations of each resource specification in each availability zone is determined based on the quantity of first instantiations of each resource specification in each availability zone, resource information, and a deployment strategy, and the instances of the service are deployed based on the quantity of second instantiations of each resource specification in each availability zone.

In a possible embodiment, if the sum of quantities of first instantiations of each resource specification template in all the availability zones is less than the quantity of required resources, a user is prompted with a deployment failure. A manner of prompting the user is not specifically limited in this application.

It should be noted that a quantity of first instantiations of a specific resource specification in a specific availability zone indicates that a quantity of resource specifications for instantiation in the availability zone is an evaluation value obtained based on a current resource usage of the availability zone, rather than a quantity of resource specifications that are actually used for instantiation. It should be understood that the quantity of first instantiations of each resource specification in the availability zone may be determined based on the current resource usage of the availability zone. A specific manner of determining the quantity of first instantiations of each resource specification in each availability zone is not limited in this application. The sum of quantities of first instantiations of each resource specification template in all the availability zones is calculated to determine whether current resources in the N availability zones can meet the quantity of required resources. If the current resources in the N availability zones can meet the quantity of required resources, the quantity of second instantiations of each resource specification in each availability zone is further calculated. A quantity of second instantiations of a specific resource specification in a specific availability zone indicates a quantity of resource specifications that are actually used for instantiation in the availability zone. A specific determining manner of determining the quantity of second instantiations of each resource specification in each availability zone is not limited in this application.

For example, based on a requirement of the service of a specific user, a resource type selected by the user is a virtual machine resource with a quantity of required resources of 1000; three resource specifications selected are flavor_id_1, flavor_id_2, and flavor_id_3 in descending order of priority; three availability zones selected are AZ_1, AZ_2, and AZ_3 in descending order of priority; and a deployment strategy selected is geographical dispersion. For each of the foregoing three resource specifications, a quantity of first instantiations of each resource specification in each of the foregoing three availability zones are obtained as follows: Quantities of first instantiations of the resource specification flavor_id_1 in the availability zones AZ_1, AZ_2, and AZ_3 are respectively 300, 200, and 300; quantities of first instantiations of the resource specification flavor_id_2 in the availability zones AZ_1, AZ_2, and AZ_3 are respectively 100, 200, and 300; and quantities of first instantiations of the resource specification flavor_id_3 in the availability zones AZ_1, AZ_2, and AZ_3 are respectively 70, 100, and 50. It may be calculated that a sum of quantities of first instantiations of each resource specification in all the availability zones is as follows: (300+200+300) + (100+200+300) + (70+100+50) = 1620, and 1620 is greater than the quantity of required resources 1000. Therefore, a resource requirement of the service can be met, and the quantity of second instantiations of each resource specification in each availability zone is then determined. It is assumed herein that a priority of a resource specification is higher than a priority of an availability zone. Based on priorities of two resource specifications, instantiation is performed preferentially based on flavor_id_1. Therefore, quantities of second instantiations of flavor_id_1 in the availability zones AZ_1, AZ_2, and AZ_3 are respectively 300, 200, and 300. Because a sum of quantities of second instantiations of flavor_id_1 in the three availability zones is 800, and 800 is less than the quantity of required resources 1000, 200 virtual machines are instantiated based on flavor_id_2, and instantiation does not need to be performed based on flavor_id_3. When instantiation is performed based on flavor_id_2, instances are deployed in three availability zones as dispersedly as possible to ensure geographical distribution. An average number is calculated as follows: 200/3 = 66...2. With reference to the priority of each availability zone, it is determined that quantities of second instantiations of flavor_id_2 in the availability zones AZ_1, AZ_2, and AZ_3 are respectively 67, 67, and 66. Finally, the instances of the service are deployed in the three availability zones based on the quantity of second instantiations of each resource specification in each availability zone.

For another example, a resource type applied for by a specific user is a virtual machine with a quantity of required resources of 9000, and only one resource specification flavor_id_1 is selected. Four selected availability zones in descending order of priority are AZ_1, AZ_2, AZ_3, and AZ_4. A selected deployment strategy is geographical centralization. Currently, quantities of first instantiations of the resource specification flavor_id_1 in the availability zones AZ_1, AZ_2, AZ_3, and AZ_4 are respectively 450, 200, 9000, and 180. It may be calculated that the sum of quantities of first instantiations of flavor_id_1 in the four availability zones is as follows: 450+200+9000+180 = 9830, and 9830 is greater than the resource requirement 9000. Therefore, the quantity of required resources of the service can be met, and the quantity of second instantiations of flavor _id_1 in each availability zone is then determined. To ensure geographical centralization, the instances of the service should be deployed in one or more availability zones as centrally as possible. However, priorities of the one or more availability zones should be considered. Because AZ_1 has a higher priority, the instances are preferentially deployed in AZ_1. It is determined that a quantity of second instantiations of flavor jd _1 in the availability zone AZ_1 is 450, which does not reach the quantity of required resources 9000. Therefore, the instances further need to be deployed in AZ_2 with a second highest priority, and it is determined that a quantity of second instantiations of flavor_id_1 in KL_2 is 200. If the quantity still does not reach 9000, 8350 virtual machines continue to be deployed in AZ_3 to reach 9000. Therefore, quantities of second instantiations of flavor_id_1 in the availability zones AZ_1, AZ_2, AZ_3, and AZ_4 are respectively 450, 200, 8350, and 0. Deployment of the instances of the service is completed based on the quantity of second instantiations of each resource specification in each availability zone.

In conclusion, according to the instance deployment method provided in embodiments of this application, global resources of the central cloud and the edge cloud are combined. This facilitates managing resources of the central cloud and the edge cloud in a unified manner by the cloud service provider, implements the deployment of the instances across the central cloud and the edge cloud, meets a requirement of the service, and increases the resource usage. The method supports selecting one or more resource specifications. Because instances with different resource specifications may be deployed in a same availability zone, resource usage of each availability zone can be increased. In addition, the deployment of the instances across regions is supported. This meets the user for a requirement of the deployment of the instances of the service across regions, and resolves a problem that resources in a single region cannot ensure a large-scale resource demand. The method can further balance resource usage of each region and each availability zone, and appropriately allocate cloud computing resources to complete the deployment of the instances of the service.

FIG. 5 is a schematic flowchart of an instance deployment method according to an embodiment of this application. The method includes the following steps.

S101: Obtain a resource requirement of a service.

The service refers to a specific service that a user expects to implement, for example, cloud office, online education, the internet of things, or game acceleration. A specific type of the service is not limited in this application.

In a possible embodiment, the resource requirement includes a resource type, a quantity of required resources, and M resource specifications, and M is a positive integer.

In a possible embodiment, the resource type includes at least one of a virtual machine, a docker, and a bare metal server.

In a possible embodiment, the resource requirement further includes any one of a priority, an allocation weight, and a minimum allocation proportion of each of the M resource specifications.

It should be noted that for specific content of each embodiment in step S101, refer to the foregoing related descriptions. Details are not described herein.

S 102: Deploy instances of the service across a central cloud and an edge cloud based on the resource requirement of the service.

In a possible embodiment, deploying the instances of the service across the central cloud and the edge cloud specifically includes: for each of the M resource specifications, determining a quantity of first instantiations of each resource specification in each of N availability zones; and if a sum of quantities of first instantiations of each resource specification in all the availability zones is greater than or equal to the quantity of required resources, determining, based on the quantity of first instantiations of each resource specification in each availability zone, the resource requirement, and the deployment strategy, a quantity of second instantiations of each resource specification in each availability zone, and finally deploying the instances of the services based on the quantity of second instantiations of each resource specification in each availability zone.

In a possible embodiment, if the sum of quantities of first instantiations of each resource specification template in all the availability zones is less than the quantity of required resources, the user is prompted with a deployment failure.

For details about the quantity of first instantiations and the quantity of second instantiations, refer to the foregoing related descriptions. It may be understood that if the sum of quantities of first instantiations of each resource specification template in all the availability zones is less than the quantity of required resources, deployment of the instances of the service cannot be performed, and the user is prompted with the deployment failure. If the sum of quantities of first instantiations of each resource specification template in all the availability zones is greater than or equal to the quantity of required resources, it indicates that the deployment of the instances can be performed. Therefore, the quantity of second instantiations of each resource specification in each availability zone continues to be determined, to meet a requirement of the service of the user.

In a possible embodiment, the method further includes: obtaining deployment location information of the service, where the deployment location information is used to separately determine one or more availability zones from the central cloud and the edge cloud to obtain the N availability zones, and the N availability zones are used for deploying the instances of the service. It should be understood that the instances of the service are deployed in the determined N availability zones, in other words, the deployment of the instances across the central cloud and the edge cloud may be completed.

In a possible embodiment, the obtaining deployment location information of the service includes: obtaining deployment location information input by the user.

In a possible embodiment, the deployment location information includes at least one of a geographical location level and a geographical location name.

In a possible embodiment, the deployment location information includes at least one of a target area and a target availability zone.

In a possible embodiment, the deployment location information further includes a priority of each of the N availability zones.

In a possible embodiment, if the N availability zones cannot meet the resource requirement of the service, the user is prompted with the deployment failure.

In a possible embodiment, the method further includes: obtaining the deployment strategy, where the deployment strategy is used to determine distribution of the instances of the service in the N availability zones.

In a possible embodiment, the deployment strategy includes any one of geographical centralization, geographical dispersion, costs first, data synchronization, latency first, and performance first.

It should be noted that for specific content of the foregoing embodiments, refer to the foregoing related descriptions. For brevity of the specification, details are not described herein.

In conclusion, according to the instance deployment method provided in this embodiment of this application, by obtaining the resource requirement of the service, the instances of the service may be deployed across the central cloud and the edge cloud based on the resource requirement of the service. The resource requirement may include the resource type, the quantity of required resources, and the M resource specifications. The deployment location information of the service is obtained, so that the N availability zones may be determined across the central cloud and the edge cloud, and then the instances of the service are deployed in the N availability zones. The deployment location information may include one or more of the geographical location level, the geographical location name, the target area, the target availability zone, and the priority of each of the N availability zones. The deployment location information of the service may be input by the user. The user may set the deployment location information by using the foregoing dimensions, to meet the requirement of the service of the user. The deployment strategy is obtained, so that the distribution of the instances of the service in the N availability zones may be determined. The deployment strategy may include any one of the geographical centralization, the geographical dispersion, the costs first, the data synchronization, the latency first, and the performance first. The user may select an appropriate deployment strategy from the foregoing deployment strategies. The deployment of the instances of the service across the central cloud and the edge cloud may specifically be: The quantity of first instantiations of each resource specification in each availability zone is first obtained, to determine whether resources in the N availability zones can meet the quantity of required resources; and if resources in the N availability zones can meet the quantity of required resources, the quantity of second instantiations of each resource specification in each availability zone is then determined, to implement deployment of the instances of the service in the N availability zones. When the N availability zones cannot meet the resource requirement of the service, the user may be further prompted with the deployment failure, so that the user performs a subsequent operation, for example, re-inputs the deployment location information.

It can be learned that because in this method, global resources of the central cloud and the edge cloud are scheduled in combination, the user does not need to select either the central cloud or the edge cloud, and may use resources of the central cloud and the edge cloud simultaneously, implementing the deployment of the instances across the central cloud and the edge cloud. This can meet requirements of the deployment in various service scenarios, and increase resource usage. This method supports selecting one or more resource specifications and resource types, so that the deployment of mixing instances with a plurality of resource types, a plurality of resource specifications, and a plurality of availability zones can be implemented. The instances with different resource specifications may be deployed in a same availability zone, to increase the resource usage of availability zones. The method further supports setting the priority, the allocation weight, or the minimum allocation proportion of each resource specification, and setting the priority of each availability zone, to meet different service requirements. During deploying the instances of the service across the central cloud and the edge cloud, these pieces of information may be combined, to enable flexible and diversified instance deployment of the service.

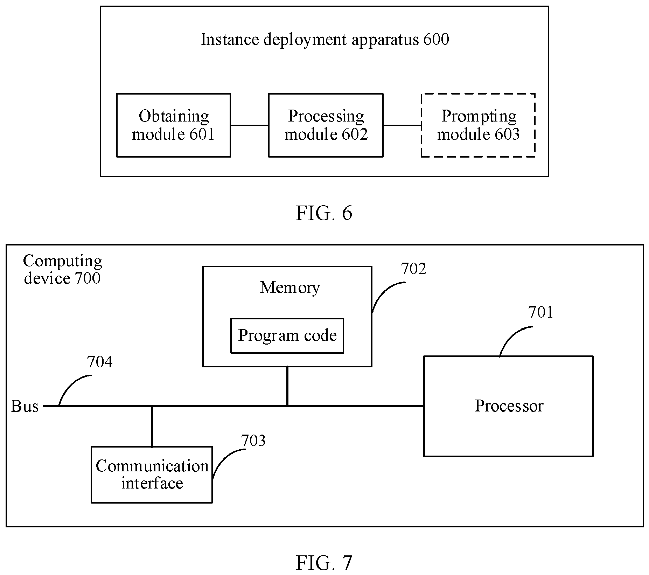

FIG. 6 is a schematic diagram of a structure of an instance deployment apparatus 600 according to an embodiment of this application. The apparatus 600 includes an obtaining module 601 and a processing module 602.

The obtaining module 601 is configured to obtain a resource requirement of a service.

The processing module 602 is configured to deploy instances of the service across a central cloud and an edge cloud based on the resource requirement of the service.

In a possible embodiment, the obtaining module 601 is further configured to obtain deployment location information of the service, where the deployment location information is used to separately determine one or more availability zones from the central cloud and the edge cloud to obtain N availability zones, and the N availability zones are used for deploying the instances of the service.

In a possible embodiment, the obtaining module 601 is specifically configured to obtain deployment location information of the service input by a user.

In a possible embodiment, the deployment location information includes at least one of a geographical location level and a geographical location name.

In a possible embodiment, the deployment location information includes at least one of a target area and a target availability zone.

In a possible embodiment, the deployment location information further includes a priority of each of the N availability zones.

In a possible embodiment, the obtaining module 601 is further configured to: obtain a deployment strategy, where the deployment strategy is used to determine distribution of the instances of the service in the N availability zones.

In a possible embodiment, the deployment strategy includes any one of geographical centralization, geographical dispersion, costs first, data synchronization, latency first, and performance first.

In a possible embodiment, the resource requirement includes a resource type, a quantity of required resources, and M resource specifications, and M is a positive integer.

In a possible embodiment, the processing module 602 is specifically configured to: for each of the M resource specifications, determine a quantity of first instantiations of each resource specification in each of the N availability zones; and
if a sum of quantities of first instantiations of each resource specification in all the availability zones is greater than or equal to the quantity of required resources, determine, based on the first instantiation of each resource specification in each availability zone, the resource requirement, and the deployment strategy, a quantity of second instantiations of each resource specification in each availability zone, and deploy the instances of the service based on the quantity of second instantiations of each resource specification in each availability zone.

In a possible embodiment, the instance deployment apparatus 600 further includes a prompting module 603. The prompting module 603 is configured to: if the N availability zones cannot meet the resource requirement of the service, prompt the user of a deployment failure.

In a possible embodiment, the resource type includes at least one of a virtual machine, a docker, and a bare metal server.

Each module of the instance deployment apparatus 600 is specifically configured to implement any embodiment of the instance deployment method in FIG. 5. For brevity of the specification, details are not described herein.

FIG. 7 is a schematic diagram of a structure of a computing device 700 according to an embodiment of this application. The computing device 700 may be a computing device such as a notebook computer, a tablet computer, or a cloud server. This is not limited in this application.

The computing device 700 includes a processor 701, a memory 702, and a communication interface 703, and is specifically configured to implement steps S101 and S 102 in the instance deployment method in FIG. 5. The processor 701, the memory 702, and the communication interface 703 may be connected to each other by using an internal bus 704, or may implement communication via another means such as wireless transmission. In an embodiment of this application, the bus 704 is used as an example for connection. The bus 704 may be a peripheral component interconnect (peripheral component interconnect, PCI) bus, an extended industry standard architecture (extended industry standard architecture, EISA) bus, or the like. The bus 704 may be classified into an address bus, a data bus, a control bus, and the like. For ease of representation, only one bold line is used for representation in FIG. 7, but this does not mean that there is only one bus or only one type of bus.

The processor 701 may include at least one general-purpose processor, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The processor 701 executes various types of digital storage instructions, for example, software or firmware programs stored in the memory 702, and enables the computing device 700 to provide various services.

The memory 702 is configured to store program code, and execution of the program code is controlled by the processor 701, to perform any embodiment of the instance deployment method in FIG. 5. The program code may include one or more software modules. The one or more software modules may be software modules provided in the embodiment in FIG. 6, for example, the obtaining module 601 and the processing module 602. Each of the computing device 700 may be specifically configured to perform any embodiment of steps S101 and S 102 in FIG. 5. For brevity of the specification, details are not described herein.

It should be noted that this embodiment may be implemented by a general-purpose physical server, for example, an ARM server or an X86 server, or may be implemented by a virtual machine that is implemented based on a general-purpose physical server in combination with an NFV technology. The virtual machine is a software-stimulated complete computer system that has a function of a complete hardware system and operates in a fully isolated environment. This is not specifically limited in this application. It should be understood that the computing device 700 shown in FIG. 7 may alternatively be a computer cluster including at least one server. This is not specifically limited in this application.

The memory 702 may include a volatile memory (volatile memory), for example, a random access memory (random access memory, RAM). The memory 702 may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 702 may alternatively include a combination of the foregoing types of memories. The memory 702 may store the program code, and may specifically include the program code used to perform steps S101 and S 102 described in FIG. 5. Details are not described herein again.

The communication interface 703 may be a wired interface (for example, an Ethernet interface), an internal interface (for example, a peripheral component interconnect express (peripheral component interconnect express, PCIe) bus interface), a wired interface (for example, an Ethernet interface), or a wireless interface (for example, a cellular network interface or a wireless local area network interface), and is configured to communicate with another device or module.

It should be noted that FIG. 7 is only a possible implementation of embodiments of this application. During actual application, the computing device 700 may alternatively include more or fewer components. This is not limited herein. For content that is not presented or not described in this embodiment of this application, refer to related descriptions in embodiments of the instance deployment method in FIG. 5. Details are not described herein again.

An embodiment of this application further provides a computer-readable storage medium. The computer-readable storage medium stores instructions. When the instructions are run on a processor, method procedures shown in FIG. 5 are implemented.

An embodiment of this application further provides a computer program product. When the computer program product is run on a processor, method procedures shown in FIG. 5 are implemented.

An embodiment of this application further provides a central cloud, including the computing device 700.

An embodiment of this application further provides an edge cloud, including the computing device 700. In other words, the computing device 700 may be deployed in the edge cloud, or may be deployed in a central cloud. A location of the computing device 700 is not specifically limited in this application.

An embodiment of this application further provides a cloud system, including the computing device 600 and a user terminal. The user terminal herein may be a mobile phone, a tablet computer, a wearable device, a vehicle-mounted device, a notebook computer, a smart television, or the like. A specific type of the user terminal is not limited in this application. It should be understood that a user may input information related to a service by using the user terminal. For example, the user inputs one or more of a resource requirement of a service, deployment location information of the service, and a deployment strategy on a terminal device, to implement a personalized setting for deployment the service. After the information related to the service is input by using the user terminal, the user terminal may send the information to the computing device 700, and enables the computing device 700 to perform any embodiment of steps S101 and S 102 in FIG. 5.

A person of ordinary skill in the art may understand that all or some procedures of methods in the foregoing embodiments may be implemented by a computer program instructing related hardware. The program may be stored in a computer-readable storage medium. When the program is run, the procedures of the methods in the foregoing embodiments are performed. The storage medium may include: a magnetic disk, an optical disc, a read-only memory (read-only memory, ROM), a random access memory (random access memory, RAM), or the like.

What is disclosed above is merely an example embodiment of this application, and certainly is not intended to limit the scope of the claims of this application. A person of ordinary skill in the art may understand that all or some procedures that implement the foregoing embodiment and equivalent modifications made in accordance with the claims of this application shall fall within the scope of the present invention.

## Claims

1. An instance deployment method, wherein the method comprises:
obtaining a resource requirement of a service; and
deploying instances of the service across a central cloud and an edge cloud based on the resource requirement of the service.

2. The method according to claim 1, wherein the method further comprises:
obtaining deployment location information of the service, wherein the deployment location information is used to separately determine one or more availability zones from the central cloud and the edge cloud to obtain N availability zones, and the N availability zones are used for deploying the instances of the service.

3. The method according to claim 2, wherein the obtaining deployment location information of the service comprises:
obtaining the deployment location information of the service input by a user.

4. The method according to claim 2 or 3, wherein the deployment location information comprises at least one of a geographical location level and a geographical location name.

5. The method according to claim 2 or 3, wherein the deployment location information comprises at least one of a target area and a target availability zone.

6. The method according to any one of claims 2 to 5, wherein the deployment location information further comprises a priority of each of the N availability zones.

7. The method according to any one of claims 2 to 6, wherein the method further comprises:
obtaining a deployment strategy, wherein the deployment strategy is used to determine distribution of the instances of the service in the N availability zones.

8. The method according to claim 7, wherein the deployment strategy comprises any one of geographical centralization, geographical dispersion, costs first, data synchronization, latency first, and performance first.

9. The method according to any one of claims 1 to 8, wherein the resource requirement comprises a resource type, a quantity of required resources, and M resource specifications, and M is a positive integer.

10. The method according to claim 9, wherein the deploying instances of the service across a central cloud and an edge cloud comprises:
for each of the M resource specifications, determining a quantity of first instantiations of each resource specification in each of the N availability zones; and
if a sum of quantities of first instantiations of each resource specification in all the availability zones is greater than or equal to the quantity of required resources, determining, based on the first instantiation of each resource specification in each availability zone, the resource requirement, and the deployment strategy, a quantity of second instantiations of each resource specification in each availability zone, and deploying the instances of the service based on the quantity of second instantiations of each resource specification in each availability zone.

11. The method according to any one of claims 2 to 10, wherein the method further comprises:
if the N availability zones cannot meet the resource requirement of the service, prompting the user of a deployment failure.

12. The method according to any one of claims 9 to 11, wherein the resource type comprises at least one of a virtual machine, a docker, and a bare metal server.

13. An instance deployment apparatus, wherein the apparatus comprises:
an obtaining module, configured to obtain a resource requirement of a service; and
a processing module, configured to deploy instances of the service across a central cloud and an edge cloud based on the resource requirement of the service.

14. The apparatus according to claim 13, wherein the obtaining module is further configured to:
obtain deployment location information of the service, wherein the deployment location information is used to separately determine one or more availability zones from the central cloud and the edge cloud to obtain N availability zones, and the N availability zones are used for deploying the instances of the service.

15. The apparatus according to claim 14, wherein the obtaining deployment location information of the service comprises:
obtaining the deployment location information of the service input by a user.

16. The apparatus according to claim 14 or 15, wherein the deployment location information comprises at least one of a geographical location level and a geographical location name.

17. The apparatus according to claim 14 or 15, wherein the deployment location information comprises at least one of a target area and a target availability zone.

18. The apparatus according to any one of claims 14 to 17, wherein the deployment location information further comprises a priority of each of the N availability zones.

19. The apparatus according to any one of claims 14 to 17, wherein the obtaining module is further configured to:
obtain a deployment strategy, wherein the deployment strategy is used to determine distribution of the instances of the service in the N availability zones.

20. The apparatus according to claim 19, wherein the deployment strategy comprises any one of geographical centralization, geographical dispersion, costs first, data synchronization, latency first, and performance first.

21. The apparatus according to any one of claims 13 to 20, wherein the resource requirement comprises a resource type, a quantity of required resources, and M resource specifications, and M is a positive integer.

22. The apparatus according to claim 21, wherein the processing module is specifically configured to:
for each of the M resource specifications, determine a quantity of first instantiations of each resource specification in each of the N availability zones; and
if a sum of quantities of first instantiations of each resource specification in all the availability zones is greater than or equal to the quantity of required resources, determine, based on the first instantiation of each resource specification in each availability zone, the resource requirement, and the deployment strategy, a quantity of second instantiations of each resource specification in each availability zone, and deploy the instances of the service based on the quantity of second instantiations of each resource specification in each availability zone.

23. The apparatus according to any one of claims 14 to 22, wherein the apparatus further comprises a prompting module, and the prompting module is configured to: if the N availability zones cannot meet the resource requirement of the service, prompt the user of a deployment failure.

24. The apparatus according to any one of claims 21 to 23, wherein the resource type comprises at least one of a virtual machine, a docker, and a bare metal server.

25. A computing device, comprising a processor and a memory, wherein
the memory is configured to store a computer program; and
the processor is configured to execute the computer program stored in the memory, to enable the computing device to perform the method according to any one of claims 1 to 12.

26. A computer-readable storage medium, comprising a program or instructions, wherein when the program or the instructions is/are run on a computing device, the method according to any one of claims 1 to 12 is performed.

27. A central cloud, comprising the computing device according to claim 25.

28. An edge cloud, comprising the computing device according to claim 25.

29. A cloud system, comprising the computing device according to claim 25 and a user terminal.
